# EUROPÄISCHE PATENTSCHRIFT

(11) **EP 0 983 904 B1**
(45) Veröffentlichungstag und Bekanntmachung des Hinweises auf die Patenterteilung: **27.02.2002**
(21) Anmeldenummer: 99113186.3
(22) Anmeldetag: 08.07.1999
(51) Int. Cl.: B60R 13/02, B62D 31/02

(54) **Profilleistensatz**
Trim profiles set
Ensemble de profilés de garniture

(30) Priorität: 29.08.1998 DE 19839495
(43) Veröffentlichungstag der Anmeldung: 08.03.2000
(73) Patentinhaber: HAPPICH Fahrzeug- und Industrieteile GmbH, 42285 Wuppertal (DE)
(72) Erfinder: Marcus, Armin, 42399 Wuppertal (DE); Gebel, Thomas, 42111 Wuppertal (DE)

(56) Entgegenhaltungen:
- EP-A- 0 254 635
- EP-A- 0 803 403
- EP-A- 0 829 393

## Beschreibung

Die Erfindung bezieht sich auf einen Profilleistensatz für die fahrzeuginnenseitige Einfassung von Fenstern in Personenbeförderungsfahrzeugen, insbesondere Bussen.

Die fahrzeuginnenseitige Einfassung von Scheiben in Bussen und dgl. ist recht aufwendig, da kaum auf Standardteile zurückgegriffen werden kann. In der Regel werden daher Einzellösungen konstruiert und verbaut, was kostenmäßig zu Buche schlägt (siehe EP-A-0 829 393). Man hat zwar schon versucht, die in Längsrichtung verlaufenden Profile, die als Brüstungsleisten eingesetzt werden, mehr oder weniger einheitlich zu gestalten und dabei auch gewisse Erfolge erzielen können. Diese Profile waren aber unbrauchbar, wenn es darum ging, die Fensterseitenholme gut aussehend einzufassen. Insoweit mußten dann wieder Einzellösungen herhalten mit entsprechendem Arbeits- und Kostenaufwand.

Der vorliegenden Erfindung liegt daher die Aufgabe zugrunde, einen Profilleistensatz für die fahrzeuginnenseitige Einfassung von Fenstern in insbesondere Bussen zur Verfügung zu stellen, mittels dem sich die genannten Einbauprobleme minimieren lassen.

Zur Lösung dieser Aufgabe sind erfindungsgemäß die im Anspruch 1 angegebenen Maßnahmen vorgesehen, während vorteilhafte Ausgestaltungen und zweckmäßige Weiterbildungen der Erfindung in den Unteransprüchen gekennzeichnet sind.

Der erfindungsgemäße Profilleistensatz kommt mit drei Profilen aus, nämlich einem Grundprofil, einem Abdeckprofil und einem Adapterprofil. Zusätzlich wird noch eine Blende benötigt.

Der besondere Vorteil der Erfindung besteht darin, daß mit diesen drei Profilen, stets gearbeitet werden kann und daß insbesondere nur noch ein Grundprofil vorliegt, das sowohl am Brüstungs- als auch am Säulenbereich anordbar ist. Das Grundprofil, das aus dem Abschnitt eines Strangpreßprofils besteht, wird zweckmäßigerweise mittels Schrauben an den Holmen, die ihrerseits unterschiedliche Säulenbreiten aufweisen können, festgelegt. Bei variierendem Abstand zwischen einer Fahrzeuginnenverkleidung und einer Fensterscheibe kann eine Kürzung des ersten Schenkels des Grundprofils erforderlich sein, was ohne besonderen Aufwand durch Beschnitt realisierbar ist. Die Festlegung des Abdeckprofils, das ebenfalls aus dem Abschnitt eines Strangpreßprofils besteht und sich über die gesamte Fahrzeuglänge erstrecken kann, am Grundprofil kann schnell und einfach über eine Klipsmontage erfolgen. Auch die Festlegung der aus Abschnitten eines Strangpreßprofils bestehenden Adapterprofile am Grundprofil erfolgt über eine überaus einfach durchzuführende Klipsmontage unter gleichzeitiger Befestigungsanordnung der jeweiligen Blende.

Ein Ausführungsbeispiel der Erfindung wird nachfolgend anhand der Zeichnungen näher erläutert, und es zeigen:
- Fig. 1: die Innenansicht einer Omnibusseitenwand mit Fenstern,
- Fig. 2: einen Schnitt folgend der Linie II - II in Fig. 1 und

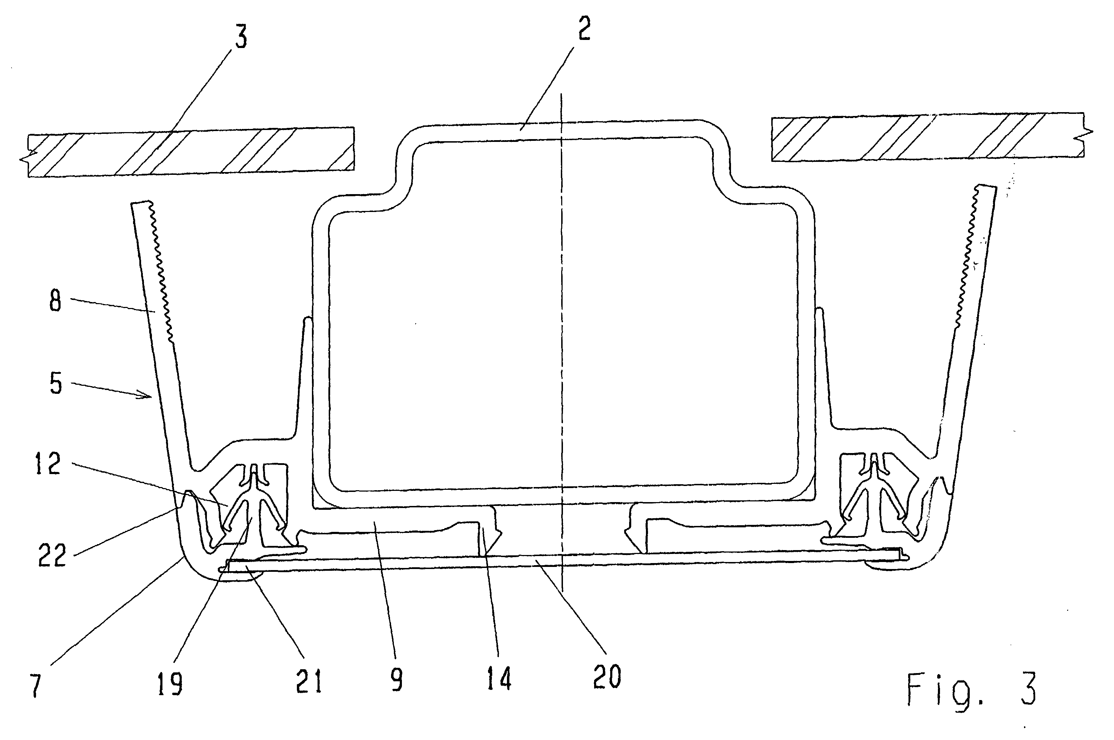

- Fig. 3: einen Schnitt folgend der Linie III - III in Fig. 1.

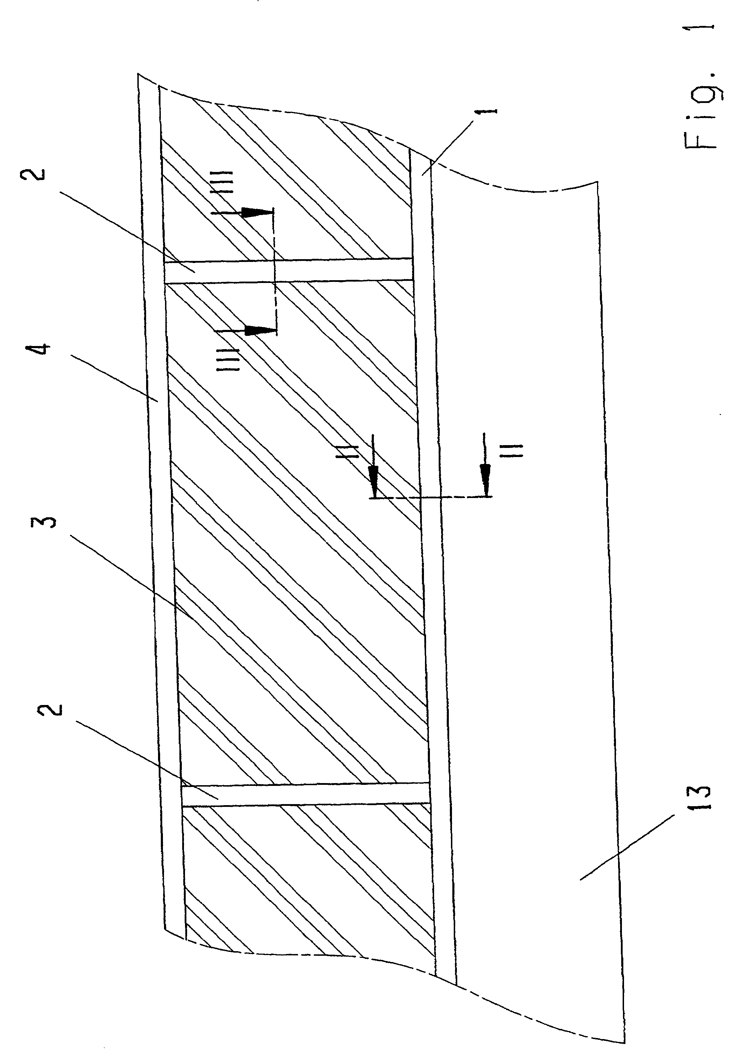

Fig. 1 zeigt einen sich über die Fahrzeuglänge erstreckenden, den unteren Fensterabschluß bildenden horizontal ausgerichteten Holm 1 und darauf etwa vertikal ausgerichtet angeordnete Holme 2.

Die Holme 1 und 2 definieren Fensteröffnungen für darin eingesetzte Fensterscheiben 3. Ein Holm 4, an den sich z. B. ein Luftkanal anschließen kann, bildet den oberen Fensterabschluß.

Um dem Fahrzeuginnenraum ein ästhetisch ansprechendes Aussehen zu vermitteln, bedarf es der Verkleidung bzw. Einfassung der Holme 1 und 2. Hierfür dient ein Profilleistensatz, bestehend aus einem einheitlichen Grundprofil 5, einem Abdeckprofil 6 und einem einheitlichen Adapterprofil 7.

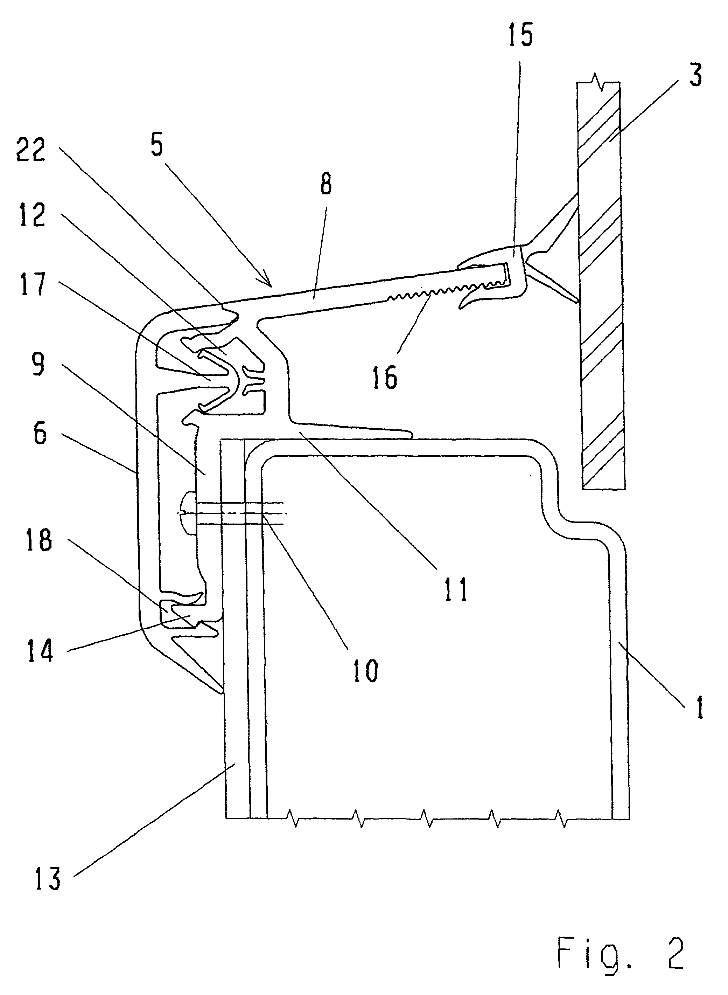

Das Grundprofil 5 ist zur Befestigungsanordnung sowohl am sich horizontal erstreckenden Holm 1 als auch an den vertikal ausgerichteten Holmen 2 geeignet und bestimmt. Das Grundprofil 5 weist einen ersten Schenkel 8, dessen freier Längsrand an einer Fensterscheibe 3 abgestützt ist und einen dazu winklig ausgerichteten zweiten Schenkel 9 auf, der an den Holmen 1 und 2 anlegbar und daran mittels Schrauben 10 befestigbar ist. Dabei kann gleichzeitig auch eine Fahrzeuginnenverkleidung 13 (Fig. 2) gehaltert werden. Zur Montagevereinfachung ist rückseitig am zweiten Schenkel 9 ein durchlaufender Steg 11 angeformt, der mit dem zweiten Schenkel 9 einen rechten Winkel bildet. Das Grundprofil 5 weist weiterhin eine hinterschnittene Nut 12 als Klipsaufnahme auf, die sich im Bereich zwischen dem ersten Schenkel 8 und dem Steg 11 durchlaufend erstreckt. Am freien Endbereich des zweiten Schenkels 9 ist in abgewinkelter Ausrichtung ein mit einer durchlaufenden Kopfverdickung versehener Klipssteg 14 angeformt.

Die Schenkellänge des ersten Schenkels 8 am Grundprofil 5 ist auf das Größtmaß zwischen der Fahrzeuginnenverkleidung 13 und einer Fensterscheibe 3 abgestimmt. Eine andere Möglichkeit besteht darin, die Schenkellänge von vornherein kürzer zu gestalten und auf das freie Schenkelende ein Beisteckprofil 15, das mit einer weichen Anlegelippe versehen sein kann, aufzustecken. Um einen sicheren Halt für das Beisteckprofil 15, mit dem sich natürlich in einfacher Weise Bauteiltoleranzen ausgleichen lassen, zu erzielen, ist der erste Schenkel 8 rückseitig mit einer längsdurchlaufenden Riefelung 16 oder einer sägeblattähnlichen Verzahnung versehen. Diese kann auch bei einem etwaigen Beschnitt des ersten Schenkels 8, der bei größeren Maßunterschieden erforderlich sein kann, hilfreich sein.

Das Grundprofil 5 besteht aus dem Abschnitt eines Strangpreßprofils endlicher Länge und ist aus einem Klipseigenschaften aufweisenden Material, insbesondere Kunststoff gebildet.

Zum Profilleistensatz gehört das bereits erwähnte Abdeckprofil 6. Dieses ist ebenso wie das Grundprofil 5 aus dem Abschnitt eines Strangpreßprofils, vorzugsweise aus Kunststoff gebildet und kann sich durchlaufend über die gesamte Seitenwandlänge des jeweiligen Fahrzeugs erstrecken. Das Abdeckprofil 6 ist im Querschnitt gesehen etwa U-förmig und weist rückseitig des U-Stegs einen angeformten Klipssteg 17 zum Einklipsen in die hinterschnittene Nut 12 am Grundprofil 5 sowie eine hinterschnittene Klipsaufnahme 18 zum Einklipsen des Klipsstegs 14 am Grundprofil 5 auf.

Auch das genannte Adapterprofil 7 gehört zu dem neuen Profilleistensatz und besteht aus Abschnitten eines Strangpreßprofils, vorzugsweise aus Kunststoff. Das Adapterprofil 7 kann links und rechts der Holme 2 am jeweiligen Grundprofil 5 angeordnet werden. Das Adapterprofil 7 besitzt einen rückseitig durchlaufend angeformten Klipssteg 19 zum Einklipsen in die als Klipsaufnahme dienende Nut 12 im Grundprofil 5. Dem Adapterprofil 7 kommt eine Abdeckfunktion und eine Haltefunktion zu. Die Haltefunktion wird für eine die Holme 2 jeweils überspannende Blende 20, die aus einem Blech-, Kunststoffstreifen oder dgl. bestehen kann, benötigt und wird durch eine Nutaufnahme 21 erfüllt.

Zum flächenbündigen Abschluß zwischen dem Grundprofil 5 und dem Abdeckprofil 6 bzw. dem Adapterprofil 7 dient eine am ersten Schenkel 8 des Grundprofils 5 vorgesehene stufenförmige Absetzung 22.

## Patentansprüche

1. Profilleistensatz für die fahrzeuginnenseitige Einfassung von Fenstern in Personenbeförderungsfahrzeugen, insbesondere Bussen, mit
- einem einheitlichen Grundprofil (5) zur Befestigungsanordnung an einem den unteren Fensterabschluß bildenden horizontal ausgerichteten Holm (1) und beidseitig an jeweils einem einen seitlichen Fensterabschluß bildenden vertikal ausgerichteten Holm (2) einer Fensterseitenwand,
- einem ersten Schenkel (8) am Grundprofil (5), dessen freier Längsrand an der jeweiligen Fensterscheibe (3) abstützbar ist und einen dazu winklig ausgerichteten zweiten Schenkel (9), der in paralleler Ausrichtung zur Fensterscheibe (3) am jeweiligen Holm (1, 2) anlegbar und daran ggf. unter Festlegung einer Verkleidung (13) befestigbar, wie anschraubbar ist,
- mindestens einer längsdurchlaufenden Nut (12) im Grundprofil (5) die als hinterschnittene Einklipsaufnahme ausgebildet ist,
- einem in der Einbaulage längsverlaufenden, die Befestigungsstellen des Grundprofils (5) überdeckenden Abdeckprofil (6) mit einem rückseitig angeordneten, in der Klipsaufnahme des Grundprofils (5) verankerbaren Klipssteg (17),
- einem in der Einbaulage vertikal ausgerichteten Adapterprofil (7) mit einem rückseitig angeordneten, in der Klipsaufnahme des Grundprofils (5) verankerbaren Klipssteg (19) und einer Nutaufnahme (21) sowie
- einer streifenförmigen Blende (20), die zum Überdecken eines jeden vertikal ausgerichteten Holms (2) und der Befestigungsstellen der daran beidseitig angeordneten Grundprofile (5) vorgesehen und in den Nutaufnahmen (21) zweier Adapterprofile (7) gehalten ist.

2. Profilleistensatz nach Anspruch 1, **dadurch gekennzeichnet, daß** das Grundprofil (5), das Abdeckprofil (6) und das Adapterprofil (7) aus Abschnitten eines Strangpreßprofils bestehen.

3. Profilleistensatz nach Anspruch 1 oder 2, **dadurch gekennzeichnet, daß** das Grundprofil (5), das Abdeckprofil (6) und das Adapterprofil (7) aus Abschnitten eines Kunststoff-Strangpreßprofils bestehen.

4. Profilleistensatz nach wenigstens einem der vorherigen Ansprüche, **dadurch gekennzeichnet, daß** der zweite Schenkel (9) des Grundprofils (5) einen rückseitigen, entsprechend dem ersten Schenkel (8) ausgerichteten Steg (11) aufweist, der unmittelbar an einem Holm (1, 2) abstützbar ist.

5. Profilleistensatz nach wenigstens einem der vorherigen Ansprüche, **dadurch gekennzeichnet, daß** die Nut (12) im Grundprofil (5) in einem zwischen dem ersten Schenkel (8) und dem Steg (11) liegenden Bereich ausgebildet ist.

6. Profilleistensatz nach wenigstens einem der vorherigen Ansprüche, **dadurch gekennzeichnet, daß** am freien Endbereich des zweiten Schenkels (9) des Grundprofils (5) ein winklig abstehender Klipssteg (14) angeformt ist, der in eine Klipsaufnahme (18) des Abdeckprofils (6) eingreift.

7. Profilleistensatz nach wenigstens einem der vorherigen Ansprüche, **dadurch gekennzeichnet, daß** das Grundprofil (5) eine längsdurchlaufende stufenförmige Absetzung (22) als Anschlag und flächenbündigen Übergang für das Abdeckprofil (6) bzw. Adapterprofil (7) aufweist.

8. Profilleistensatz nach wenigstens einem der vorherigen Ansprüche, **dadurch gekennzeichnet, daß** der erste Schenkel (8) des Grundprofils (5) entsprechend dem Größtmaß zwischen der Fahrzeuginnenverkleidung (13) und den Fensterscheiben (3) ausgebildet und durch Beschnitt dem jeweiligen Istmaß anpaßbar ist.

9. Profilleistensatz nach wenigstens einem der vorherigen Ansprüche, **dadurch gekennzeichnet, daß** der erste Schenkel (8) des Grundprofils (5) kürzer als das Größtmaß zwischen der Fahrzeuginnenverkleidung (13) und den Fensterscheiben (3) ist und daß eine Anpassung an das jeweilige Istmaß durch ein über die freie Kante des ersten Schenkels (8) geschobenes Beisteckprofil (15) erfolgt.

10. Profilleistensatz nach wenigstens einem der vorherigen Ansprüche, **dadurch gekennzeichnet, daß** das Beisteckprofil (15) in eine weiche, sich an die jeweilige Fensterscheibe (3) anschmiegbare Lippe übergeht.

11. Profilleistensatz nach wenigstens einem der vorherigen Ansprüche, **dadurch gekennzeichnet, daß** das Grundprofil (5) einen im wesentlichen L-förmigen Querschnitt aufweist.

12. Profilleistensatz nach wenigstens einem der vorherigen Ansprüche, **dadurch gekennzeichnet, daß** das Abdeckprofil (6) einen im wesentlichen U-förmigen Querschnitt mit Klipsausbildungen am U-Steg (17, 18) aufweist.

13. Profilleistensatz nach wenigstens einem der vorherigen Ansprüche, **dadurch gekennzeichnet, daß** das Adapterprofil (7) nach Art eines abgerundeten Viertelstabs mit einer rückseitigen Klipsausbildung (19) und einer randseitigen Nutaufnahme (21) ausgebildet ist.

14. Profilleistensatz nach wenigstens einem der vorherigen Ansprüche, **dadurch gekennzeichnet, daß** die Blende (20) aus einem Band- oder Plattenmaterial zugeschnitten ist und bevorzugt aus Kunststoff besteht.

15. Profilleistensatz nach wenigstens einem der vorherigen Ansprüche, **dadurch gekennzeichnet, daß** der erste Schenkel (8) des Grundprofils (5) mit Längsriefen (16) ausgebildet ist.

## Claims

1. Set of profiled strips for the mounting of windows on the inside of passenger transportation vehicles, in particular buses, having
- a uniform base profile (5) for arranging, by fastening, on a horizontally aligned strut (1), which forms the lower window end, and at both sides on a respective vertically aligned strut (2), which forms a lateral window end, of a window side wall,
- a first limb (8) on the base profile (5), the free longitudinal edge of which limb can be supported on the respective window-pane (3) and a second limb (9) which is aligned at an angle to said first limb, can be laid, in a parallel alignment with respect to the window-pane (3), against the respective strut (1, 2) and can be fastened, as well as screwed, thereon, optionally with a panel (13) being secured thereby,
- at least one groove (12) which runs longitudinally through the base profile (5) and is designed as an undercut clip holder,
- a covering profile (6) which runs longitudinally in the installation position, covers the fastening points of the base profile (5) and has a clip web (17) which is arranged on the rear side and can be secured in the clip holder of the base profile (5),
- an adaptor profile (7) which is aligned vertically in the installation position and has a clip web (19), which is arranged on the rear side and can be secured in the clip holder of the base profile (5), and a grooved holder (21), and also
- a strip-shaped cover (20) which is provided for covering each vertically aligned strut (2) and the fastening points of the base profiles (5) arranged on both sides of said strut, and is held in the grooved holders (21) of two adaptor profiles (7).

2. Set of profiled strips according to Claim 1, **characterized in that** the base profile (5), the covering profile (6) and the adaptor profile (7) consist of sections of an extruded profile.

3. Set of profiled strips according to Claim 1 or 2, **characterized in that** the base profile (5), the covering profile (6) and the adaptor profile (7) consist of sections of a plastic extruded profile.

4. Set of profiled strips according to at least one of the previous claims, **characterized in that** the second limb (9) of the base profile (5) has a web (11) which is on the rear side, is aligned corresponding to the first limb (8) and can be supported directly against a strut (1, 2).

5. Set of profiled strips according to at least one of the previous claims, **characterized in that** the groove (12) in the base profile (5) is formed in a region which lies between the first limb (8) and the web (11).

6. Set of profiled strips according to at least one of the previous claims, **characterized in that** a clip web (14) which protrudes at an angle and engages in a clip holder (18) of the covering profile (6) is integrally formed on the free end region of the second limb (9) of the base profile (5).

7. Set of profiled strips according to at least one of the previous claims, **characterized in that** the base profile (5) has a step-shaped shoulder (22) which runs longitudinally through it and is intended as a stop, and a surface-flush transition for the covering profile (6) or adaptor profile (7).

8. Set of profiled strips according to at least one of the previous claims, **characterized in that** the first limb (8) of the base profile (5) is formed corresponding to the maximum size between the vehicle interior panelling (13) and the window-panes (3) and can be adapted to the particular actual size by trimming.

9. Set of profiled strips according to at least one of the previous claims, **characterized in that** the first limb (8) of the base profile (5) is shorter than the maximum size between the vehicle interior panelling (13) and the window-panes (3), and **in that** adaptation to the particular actual size takes place by an auxiliary plug-in profile (15) which can be inserted over the free edge of the first limb (8).

10. Set of profiled strips according to at least one of the previous claims, **characterized in that** the auxiliary plug-in profile (15) merges into a soft lip which can nestle against the particular window-pane (3).

11. Set of profiled strips according to at least one of the previous claims, **characterized in that** the base profile (5) has an essentially L-shaped cross section.

12. Set of profiled strips according to at least one of the previous claims, **characterized in that** the covering profile (6) has an essentially U-shaped cross section with clip formations on the U-web (17, 18).

13. Set of profiled strips according to at least one of the preceding claims, **characterized in that** the adaptor profile (7) is formed in the manner of a rounded quarter rod having a clip formation (19) on the rear side and a grooved holder (21) on the edge side.

14. Set of profiled strips according to at least one of the previous claims, **characterized in that** the cover (20) is cut out from a strip or sheet material and preferably consists of plastic.

15. Set of profiled strips according to at least one of the previous claims, **characterized in that** the first limb (8) of the base profile (5) is formed with longitudinal corrugations (16).

## Revendications

1. Jeu de listeaux profilés pour l'encadrement de fenêtres du côté intérieur de véhicules de transport de personnes, en particulier pour autocars, comprenant :
- un profilé unitaire de base (5) pour l'agencement par fixation sur un longeron (1) formant la fermeture inférieure de la fenêtre et orienté horizontalement, et des deux côtés chaque fois sur un montant (2) d'une paroi latérale de fenêtre, formant chaque fois une fermeture latérale de la fenêtre et orienté verticalement,
- une première aile (8) sur le profilé de base (5), dont le bord longitudinal libre peut s'appuyer sur la vitre de fenêtre (3) concernée et une deuxième aile (9) orientée obliquement par rapport à la première aile, qui peut être placée dans une orientation parallèle à la vitre de fenêtre (3) sur chaque longeron/montant (1/2) et qui peut y être fixée, par exemple par vis, avec immobilisation d'un habillage (13),
- au moins une rainure longitudinale continue (12) dans le profilé de base (5), qui est configurée comme logement à encliquetage en contre dépouille,
- un profilé de recouvrement (6) qui, dans sa position montée, s'étend longitudinalement en recouvrant les points de fixation du profilé de base (5), avec une âme d'encliquetage (17) disposée du côté dorsal et apte à être ancrée dans le logement à encliquetage du profilé de base (5),
- un profilé d'adaptation (7) orienté verticalement dans la position de montage, avec une âme d'encliquetage (19) disposée du côté dorsal et apte à être ancrée dans le logement à encliquetage du profilé de base (5), et un logement (21) en rainure, ainsi que
- un écran (20) en forme de bande, qui est prévu pour recouvrir chaque montant (2) orienté verticalement et les points de fixation des profilés de base (5) qui y sont disposés des deux côtés, et qui est maintenu dans les logements en forme de rainure (21) de deux profilés d'adaptation (7).

2. Jeu de listeaux profilés selon la revendication 1, **caractérisé en ce que** le profilé de base (5), le profilé de recouvrement (6) et le profilé d'adaptation (7) sont constitués de tronçons d'un profilé extrudé.

3. Jeu de listeaux profilés selon la revendication 1 ou 2, **caractérisé en ce que** le profilé de base (5), le profilé de recouvrement (6) et le profilé d'adaptation (7) sont constitués de tronçons d'un profilé extrudé en matière synthétique.

4. Jeu de listeaux profilés selon au moins l'une des revendications précédentes, **caractérisé en ce que** la deuxième aile (9) du profilé de base (5) présente une âme dorsale (11) orientée conformément à la première aile (8) et qui peut s'appuyer directement sur un longeron/montant (1/2).

5. Jeu de listeaux profilés selon au moins l'une des revendications précédentes, **caractérisé en ce que** la rainure (12) dans le profilé de base (5) est réalisée dans la zone située entre la première aile (8) et l'âme(11).

6. Jeu de listeaux profilés selon au moins l'une des revendications précédentes, **caractérisé en ce que** dans la zone d'extrémité libre de la deuxième aile (9) du profilé de base (5) est formée une âme à encliquetage (14) qui déborde obliquement et qui s'engage dans un logement à encliquetage (18) du profilé de recouvrement (6).

7. Jeu de listeaux profilés selon au moins l'une des revendications précédentes, **caractérisé en ce que** le profilé de base (5) présente un retrait (22) longitudinal continu en forme de marche, qui sert de butée et de jonction à chant pour le profilé de recouvrement (6) ou selon le cas le profilé d'adaptation (7).

8. Jeu de listeaux profilés selon au moins l'une des revendications précédentes, **caractérisé en ce que** la première aile (8) du profilé de base (5) est configurée conformément à la plus grande dimension entre l'habillage intérieur du véhicule (13) et la vitre de fenêtre (3) et peut être adaptée par rognage à la dimension théorique concernée.

9. Jeu de listeaux profilés selon au moins l'une des revendications précédentes, **caractérisé en ce que** la première aile (8) du profilé de base (5) est configurée de façon à être plus courte que la plus grande dimension entre l'habillage intérieur du véhicule (13) et la vitre de fenêtre (3) et **en ce qu'**une adaptation à la dimension théorique concernée s'effectue par un profilé auxiliaire pour enfichage (15) glissé par au-dessus le bord libre de la première aile (8).

10. Jeu de listeaux profilés selon au moins l'une des revendications précédentes, **caractérisé en ce que** le profilé auxiliaire pour enfichage (15) se prolonge en une lèvre malléable qui peut venir se serrer contre la vitre de fenêtre (3) concernée.

11. Jeu de listeaux profilés selon au moins l'une des revendications précédentes, **caractérisé en ce que** le profilé de base (5) présente une section transversale essentiellement en forme de L.

12. Jeu de listeaux profilés selon au moins l'une des revendications précédentes, **caractérisé en ce que** le profilé de recouvrement (6) présente une section transversale essentiellement en forme de U avec des formations d'encliquetage sur l'âme du U (17, 18).

13. Jeu de listeaux profilés selon au moins l'une des revendications précédentes, **caractérisé en ce que** le profilé d'adaptation (7) est configuré en quart de rond avec une formation arrière à encliquetage (19) et un logement en forme de rainure (21) sur un bord.

14. Jeu de listeaux profilés selon au moins l'une des revendications précédentes, **caractérisé en ce que** l'écran (20) est découpé dans un matériau en bande ou en plaque et est de préférence réalisé en matière synthétique.

15. Jeu de listeaux profilés selon au moins l'une des revendications précédentes, **caractérisé en ce que** la première aile (8) du profilé de base (5) est configurée avec des cannelures longitudinales (16).
